# EUROPÄISCHE PATENTSCHRIFT

(11) **EP 0 775 606 B1**
(45) Veröffentlichungstag und Bekanntmachung des Hinweises auf die Patenterteilung: **27.12.2000**
(21) Anmeldenummer: 96117410.9
(22) Anmeldetag: 30.10.1996
(51) Int. Cl.: B60K 15/03, B60K 15/077, B65D 90/52

(54) **Behälter, insbesondere für Kraftfahrzeuge**
Container, especially for motor vehicles
Réservoir, notamment pour véhicules automobiles

(30) Priorität: 27.11.1995 DE 19543915
(43) Veröffentlichungstag der Anmeldung: 28.05.1997
(73) Patentinhaber: GEIGER TECHNIK GmbH, D-82467 Garmisch-Partenkirchen (DE)
(72) Erfinder: Geiger, Albert, 82467 Gramisch-Partenkirchen (DE)
(74) Vertreter: Flosdorff, Jürgen, Dr.

(56) Entgegenhaltungen:
- GB-A- 2 006 903
- US-A- 4 013 190
- US-A- 4 297 846
- US-A- 4 589 526

## Beschreibung

Die Erfindung betrifft Behälter wie Kraftstoffbehälter, Bremsflüssigkeitsbehälter, Ölbehälter für die Lenkhydraulik oder Kühlwasserbehälter für Kraftfahrzeuge. Die Erfindung ist auch für Behälter anderer Anwendungsgebiete geeignet, die beispielsweise einer hohen Druckbelastung unterliegen oder bei denen es wünschenswert ist, daß sie nur geringe Schwallgeräusche abgeben, wenn die im Behälter befindliche Flüssigkeit in Bewegung gesetzt wird.

Die Erfindung wird nachfolgend beispielhaft an Hand eines Kühlwasserbehälters beschrieben. Derartige Kühlwasserbehälter, die als Kühlwasser-Ausgleichsbehälter über einen Auslaufstutzen mit dem Kühlwasserkreislauf in Verbindung stehen, unterliegen einer beträchtlichen thermischen Belastung und Druckbeanspruchung, beispielsweise beträgt die Betriebstemperatur bei einem bestimmten Fahrzeugtyp 132°C bei einem Überdruck von 1,4 bar.

Die Kühlwasserbehälter der betrachteten Art werden üblicherweise im Spritzgußverfahren aus einer oberen und einer unteren Behälterhälfte hergestellt, die miteinander verschweißt werden. Dabei ist es bekannt, den Innenraum der Kühlwasserbehälter durch sich im rechten Winkel kreuzende Schottwände in getrennte Kammern zu unterteilen, wobei die Schottwände in der Draufsicht ein schach-brettartiges Muster bilden. Die einzelnen Kammern stehen durch Löcher in den Schottwänden miteinander in Verbindung, durch deren Größe und Position die Geschwindigkeit festgelegt ist, mit der ein Flüssigkeitsausgleich zwischen den einzelnen Kammern erfolgt, was deshalb erforderlich ist, weil der Auslaufstutzen am Boden einer dieser Kammern angeordnet ist. Gleiches gilt für die Einfüllöffnung zum Nachfüllen von Kühlflüssigkeit, durch die die nachgefüllte Flüssigkeit ebenfalls zunächst in eine der Behälterkammern gelangt.

Die Unterteilung des Innenraums des Kühlwasserbehälters in getrennten Kammern dient vor allem dazu, sicher zu stellen, daß über dem Auslaufstutzen stets im ausreichenden Maße Kühlwasser steht, was ohne Unterteilung in einzelne kleine Kammern dann beispielsweise nicht der Fall wäre, wenn das Fahrzeug mit hoher Geschwindigkeit in eine Kurve fährt, die den nicht unterteilten Wasserspiegel in den Behälter in eine solche Schräglage einstellen könnte, daß durch den Auslaufstutzen Luft in den Kühlwasserkreislauf gelangen kann. Dies wäre -ohne Unterteilung in einzelne Kammern- auch dann möglich, wenn das Fahrzeug beispielsweise an einer steilen Steigung stehen oder fahren würde. Durch die Unterteilung des Innenraums des Kühlwasserbehälters in einzelne Kammern stellt sich in jeder dieser Kammern ein eigener schräger Wasserspiegel ein, und zwar mit einer Mindest-Höhe, die durch die in einer vorgegebenen Höhe ausgebildeten Verbindungslöcher in den Schottwänden festgelegt ist. Außerdem erhöhen die Schottwände die Stabilität des Behälters.

Der vorliegenden Erfindung liegt die Aufgabe zugrunde, einen Behälter anzugeben, der bei einem verhältnismäßig geringen Gewicht eine hohe Stabilität besitzt und der dann, wenn sein flüssiger Füllstoff in Bewegung versetzt wird, nur geringe Schwallgeräusche abgibt.

Diese Aufgabe wird erfindungsgemäß durch die Merkmale des Patentanspruchs 1 gelöst.

Vorteilhafte Weiterbildungen der Erfindung sind in den Unteransprüchen gekennzeichnet.

Der erfindungsgemäße Behälter hat Schottwände, die im Grundriß im wesentlichen wabenförmig angeordnet sind. Dies hat zur Folge, daß bei Unterteilung des Innenraums des Behälters in eine vorgegebene Anzahl von Kammern eine verhältnismäßig geringe Gesamtlänge der Schottwände erforderlich ist, wobei gleichzeitig die Festigkeit des Behälters beträchtlich erhöht ist. Bei der erfindungsgemäßen wabenförmigen Anordnung der Schottwände, werden die von der Seitenwand des Behälters auf die Schottwände übertragenen Zugkräfte günstig verteilt, wobei auch die auf die Schottwände ausgeübte Biegebelastung wegen der jeweils kurzen Schottwandlänge gering ist. Wenn zudem beispielsweise Benzin in den wabenförmigen Kammern eines Kraftstoffbehälters während der Fahrt gegen die Kammerwände schwappt, entstehen wegen der Wabenform nur geringe Schwallgeräusche, und der Benzinspiegel kehrt schneller in den Ruhestand zurück.

Im Innenbereich des Behälters befinden sich -je nach Größe des Behälters und der Kammern- Kammern mit einer geschlossenen Wabenform, wobei bevorzugt ist, daß diese geschlossenen wabenförmigen Kammern übereinstimmende Seitenlängen haben. Die Erfindung ist hierauf jedoch nicht beschränkt, vielmehr liegt es im Rahmen der Rahmen, daß je nach Behälterform und Behältergröße die Schottwände auch in einer im Grundriß sechseckigen "Wabenform" angeordnet sein können, bei der unterschiedliche Seitenlängen vorkommen.

In weiterer Ausgestaltung der Erfindung kann vorgesehen sein, daß Randkammern dadurch gebildet sind, daß Schottwände von der Außenwand zu den Eckpunkten der geschlossenen Waben-Kammern verlaufen, und zwar bevorzugt -ebenso wie an den übrigen Knotenpunkten- entlang der Winkelhalbierenden, d.h. diese am Rand angeordneten Schottwände schließen mit den zugehörigen Schottwänden der geschlossenen wabenförmigen Kammern jeweils einen Winkel von 120° ein. Hierdurch ist eine gleichmäßige Kraftverteilung in den Schottwänden gewährleistet. Natürlich kann der Behälter auch eine solche Form haben, daß sein Innenraum vollständig in geschlossene Waben-Kammern unterteilt ist.

Die Außenwand des Behälters kann nach einem weiteren Vorschlag der Erfindung im Anschlußbereich der Rand-Schottwände eingeschnürt sein, und zwar derart, daß die Außenwandabschnitte im wesentlichen tangential in die Schottwände übergehen. Dies bedeutet, daß die Außenwand des Behälters in einzelne gewölbte Felder unterteilt ist. Auch hierdurch ist die Festigkeit erhöht und die glatte Einleitung der Zugkräfte in die Schottwände verbessert.

Die Dicke der Schottwände kann in den Randbereichen des Behälters erhöht sein. Der Verbindungsbereich der Außenwand mit den Rand-Schottwänden kann verstärkt werden, um in diesem kritischen Bereich die Festigkeit des Behälters zu erhöhen.

Weitere Einzelheiten der Erfindung ergeben sich aus der nachfolgenden Beschreibung einer bevorzugten Ausführungsform der Erfindung. Dabei zeigen:
- Fig. 1: eine teilweise geschnittene Seitenansicht eines Kühlwasserbehälters;
- Fig. 2: einen Vertikalschnitt durch den Kühlwasserbehälter gemäß Fig. 1 entlang der Linie II-II;
- Fig. 3: eine rein schematische Aufsicht auf die untere Hälfte eines erfindungsgemäßen Kühlwasserbehälters, die die im wesentlichen wabenförmige Anordnung der Schottwände zeigt.

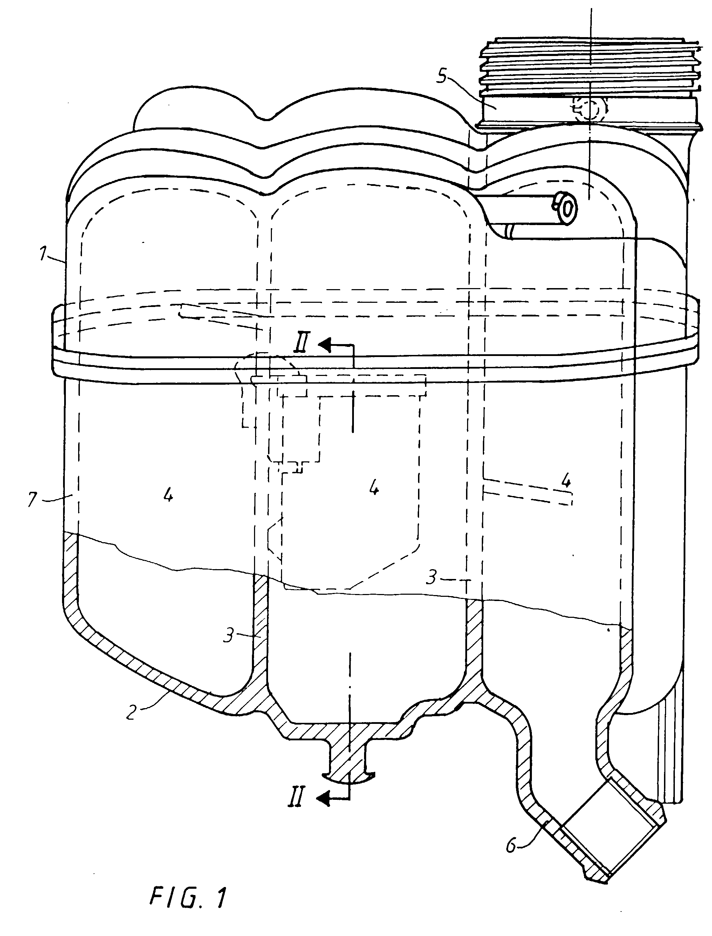

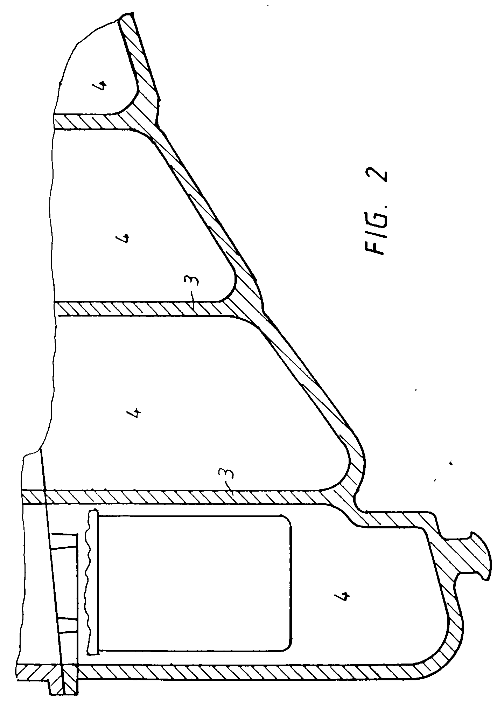

Die Figuren 1 und 2 zeigen einen Kühlwasserbehälter, der aus einer oberen Hälfte 1 und einer unteren Hälfte 2 zusammengesetzt ist. Der Innenraum des Kühlwasserbehälters ist durch Schottwände 3 in einzelne Kammer 4 unterteilt. In eine dieser Kammern mündet eine mit einer nicht dargestellten Schraubkappe verschließbare Einfüllöffnung 5 zum Nachfüllen von Kühlflüssigkeit, während am Boden einer in Längsrichtung des Behälters versetzt angeordneten Kammer ein Auslaufstutzen 6 vorgesehen ist, der mit dem Kühlflüssigkeitskreislauf eines Kraftfahrzeugs in Verbindung steht.

Die Schottwände 3 enthalten an geeigneter Stelle und in geeigneter Größe Löcher, durch die ein Flüssigkeitsausgleich mit zwischen den Kammern 4 mit einer vorgegebenen Geschwindigkeit erfolgt. Im Bereich der oberen Kühlwasserbehälterhälfte 1 sind ebenfalls Löcher in den Schottwänden 3 vorgesehen, die den Druckausgleich zwischen den Kammern 4 ermöglichen.

Fig. 2 zeigt, daß die Unterseite der unteren Hälfte 2 des Kühlwasserbehälters schräg verläuft, d.h. die Kammern 4 haben in Breitenrichtung des Kühlwasserbehälters eine unterschiedliche Höhe und damit ein unterschiedliches Kühlwasserfassungsvermögen.

Die beiden Hälften 1 und 2 werden durch Spiegelverschweißung miteinander verbunden, wobei nicht nur die Außenwand 7 des Behälters, sondern auch die Schottwände 3 miteinander verschweißt werden.

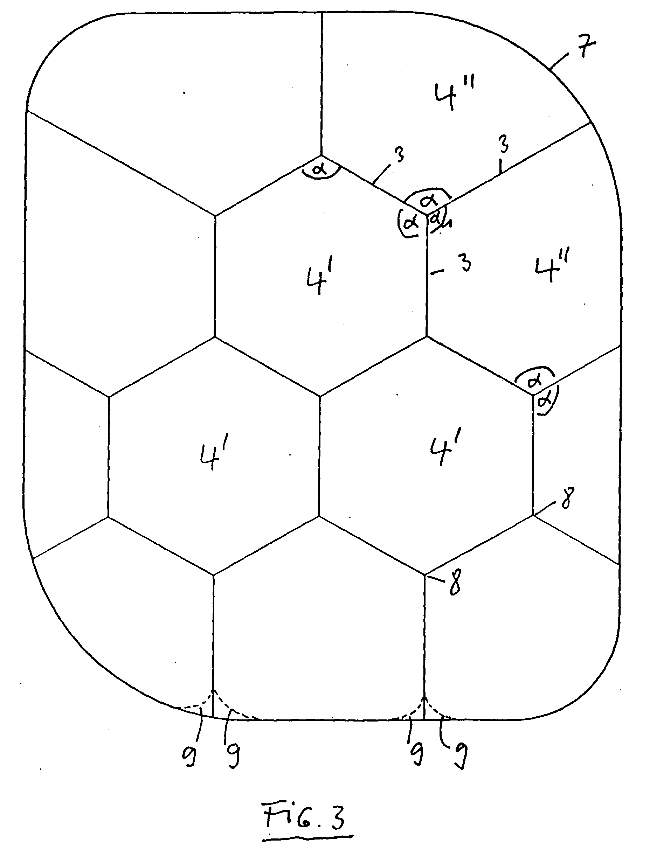

Fig. 3 zeigt die erfindungsgemäße Anordnung der Schottwände 3 in dem Kühlwasserbehälter. Im Inneren des Behälters bilden die Schottwände 3 Kammern 4' einer geschlossenen Wabenform, wobei die die einzelnen Kammern 4' umschließenden Schottwände jeweils die gleiche Länge haben und einen Winkel α = 120° einschließen.

Die an die Umfangswand 7 angrenzenden Kammern 4'' erstrecken sich von den Eckpunkten 8 der Kammern 4' geradlinig zu der Außenwand 7 des Behälters, und zwar auch hier in einem der Wabenform zugeordneten Winkel α = 120° zu den benachbarten Schottwänden 3 der Kammern 4'.

Durch eine gestrichelte Linie 9 ist in der schematischen Darstellung der Fig. 3 angedeutet, daß die Außenwand 7 im Bereich des Anschlusses an die Schottwände eingeschnürt sein kann, wobei die Einschnürung (Linie 9) etwa tangential in die zugeordneten Schottwände übergeht.

Die Kammern 4'', die mit der Einfüllöffnung 5 und dem Auslaufstutzen 6 in Verbindung stehen, können durch geeignete Positionierung der geschlossenen inneren Wabenkammern 4' gewünschte Größe (und damit Fassungsvermögen) erhalten.

Es liegt im Rahmen der Erfindung, daß die Schottwände 3 der Kammern 4' auch unterschiedliche Längen haben können, d.h. gegenüberliegende Wandpaare können eine von den übrigen Wänden abweichende Länge haben, so daß die Wabe eine langgestreckte Form erhält. Die Randkammern haben je nach Lage und Form drei oder vier Schottwände. Im Übergangsbereich zu der Außenwand 7 können die Schottwände eine größere Wandstärke haben.

Es liegt im Rahmen der Erfindung, daß die äußeren Schottwände, die die Verbindung zur Außenwand herstellen, auch durchgehend eine größere Wandstärke haben können als die Schottwände, die die Kammern 4' bilden.

## Patentansprüche

1. Aus Kunststoff hergestellter Behälter, dessen Innenraum durch vertikale Schottwände (3) in getrennte Kammern (4) unterteilt ist, die über Durchlaßöffnungen in den Schottwänden miteinander in Verbindung stehen,
**dadurch gekennzeichnet**,
daß die Schottwände (3) im Grundriß des Behälters im wesentlichen wabenförmig angeordnet sind.

2. Behälter nach Anspruch 1,
dadurch gekennzeichnet, daß die Schottwände (3) im Innenbereich des Behälters Kammern (4') mit einer geschlossenen Wabenform bilden.

3. Behälter nach Anspruch 1 oder 2,
dadurch gekennzeichnet, daß die an die Außenwände angrenzenden Kammern (4") durch Schottwände (3) gebildet sind, die von den Eckpunkten (8) der Kammern (4') jeweils in einem der Wabenform zugeordneten Winkel (α) geradlinig zu der Außenwand (7) verlaufen.

4. Behälter nach einem der Ansprüche 1 bis 3,
dadurch gekennzeichnet, daß die Außenwand (7) im Anschlußbereich der Schottwände (3) jeweils eingeschnürt ist.

5. Behälter nach einem der Ansprüche 1 bis 4,
dadurch gekennzeichnet, daß die zu der Außenwand (7) führenden Schottwände eine größere Wandstärke haben als diejenigen Schottwände, die die Kammern (4') bilden.

6. Behälter nach einem der Ansprüche 1 bis 5,
dadurch gekennzeichnet, daß er durch Verschweißen von zwei Behälterhälften (1, 2) ausgebildet ist.

## Claims

1. A container made from a plastic material, the interior of which is subdivided by vertical partitions (3) into separate chambers (4) which communicate with one another via through-holes provided in said partitions,
**characterized in**
that said partitions (3), when viewed in the ground plan of said container, are substantially arranged in the manner of honeycombs.

2. The container according to claim 1,
characterized in that in the interior of said container said partitions (3) form chambers (4') having a closed honeycomb form.

3. The container according to claim 1 or 2,
characterized in that the chambers (4") adjoining the exterior walls are formed by partitions (3) which extend each from the corner points (8) of said chambers (4') at an angle (α) assigned to the honeycomb form in a straight line towards the exterior wall (7).

4. The container according to any one of claims 1 to 3,
characterized in that the exterior wall (7) is respectively necked in the connection portion of said partitions (3).

5. The container according to any one of claims 1 to 4,
characterized in that the partitions leading to the exterior wall (7) have a greater wall thickness than the partitions that form said chambers (4').

6. The container according to any one of claims 1 to 5,
characterized in that it is formed by welding two container halves (1, 2).

## Revendications

1. Réservoir réalisé en matière synthétique, dont l'espace intérieur est divisé par des cloisons verticales (3) en des chambres séparées (4) qui sont en liaison entre elles par des ouvertures de passage dans les cloisons,
**caractérisé en ce**
que les cloisons (3), en projection horizontale du réservoir, sont disposées sensiblement en forme d'alvéole.

2. Réservoir selon la revendication 1,
caractérisé en ce que les cloisons (3), dans la zone interne du réservoir, forment des chambres (4') ayant une forme alvéolaire fermée.

3. Réservoir selon la revendication 1 ou 2,
caractérisé en ce que les chambres (4") avoisinant les parois externes sont formées par des cloisons (3) qui s'étendent à partir des points d'angle (8) des chambres (4') respectivement selon un angle (α) associé à la forme alvéolaire en ligne droite vers la paroi externe (7).

4. Réservoir selon l'une des revendications 1 à 3,
caractérisé en ce que la paroi externe (7), dans la zone de raccordement des cloisons (3), est respectivement réalisée à striction.

5. Réservoir selon l'une des revendications 1 à 4,
caractérisé en ce que les cloisons menant à la paroi externe (7) ont une plus grande épaisseur de paroi que les cloisons qui forment les chambres (4').

6. Réservoir selon l'une des revendications 1 à 5,
caractérisé en ce que celui-ci est réalisé par soudage de deux moitiés de réservoir (1, 2).
